# EUROPÄISCHE PATENTANMELDUNG

(11) **EP 1 876 502 A1**
(43) Veröffentlichungstag der Anmeldung: **09.01.2008**
(21) Anmeldenummer: 06013966.4
(22) Anmeldetag: 05.07.2006
(51) Int. Cl.: G05B 19/042

(54) **Kalibrierbare Baugruppe**

(71) Anmelder: SIEMENS AKTIENGESELLSCHAFT, 80333 München (DE)
(72) Erfinder: Rottmann, Norbert, 76829 Landau (DE)

(57) **Zusammenfassung**

Eine Baugruppe mit wenigstens einem Kanal zur Erfassung oder zur Ausgabe von Signalen, welche eine Kalibrierlogik (2) aufweist zur Kalibrierung des Kanals gemäß einem vorgegebenen Ablauf, mittels dem Kalibrierwerte ermittelt werden, und eine Anwenderschnittstelle aufweist zur Steuerung der Kalibrierung, ist dadurch gekennzeichnet, dass ein Modul vorhanden ist, in welchem der vorgegebene Ablauf gespeichert ist.

## Beschreibung

Die Erfindung betrifft eine Baugruppe nach dem Oberbegriff des Anspruchs 1, mit wenigstens einem Kanal zur Erfassung oder zur Ausgabe von Signalen, welche eine Kalibrierlogik aufweist zur Kalibrierung des Kanals gemäß einem vorgegebenen Ablauf, mittels dem Kalibrierwerte ermittelt werden, und eine Anwenderschnittstelle aufweist zur Steuerung der Kalibrierung. Des Weiteren betrifft die Erfindung ein Verfahren gemäß dem Oberbegriff des Anspruchs 4 zur Kalibrierung einer Baugruppe mit wenigstens einem Kanal zur Erfassung oder zur Ausgabe von Signalen, bei welchem die Kalibrierung gemäß einem vorgegebenen Ablauf erfolgt.

In der Automatisierungstechnik kommen Baugruppen zur Erfassung oder zur Ausgabe von Analogsignalen zur Anwendung. Bedingt durch die Bauelemente-Toleranzen weichen die Kennlinien dieser Baugruppen in der Regel von ihren Sollkennlinien ab. Es ist daher erforderlich, dass diese Baugruppen kalibriert werden. Nur durch eine Kalibrierung der Baugruppen können die üblichen Anforderungen an die Genauigkeit der Baugruppen erfüllt werden.

Die Kalibrierung der Baugruppen erfolgt heute üblicherweise am Ende der Fertigungen im Herstellerwerk. Der Ablauf des Kalibriervorgangs ist dabei geprägt vom Aufbau und von der Art der Baugruppe. Dabei spielt die Anzahl der Kanäle, die Anzahl gegebenenfalls vorhandener Analog-Digital-Wandler bei einer Analogeingabe beziehungsweise die Anzahl der Digital-Analog-Wandler bei einer Analogausgabe-Baugruppe, die Messart, ob beispielsweise Strom, Spannung oder Widerstand gemessen werden soll, wie auch der Messbereich wie beispielsweise von minus Zehn Volt bis plus Zehn Volt oder ein Volt bis fünf Volt oder Null bis zwanzig Milli-Ampere, eine Rolle.

Dementsprechend sind die notwendigen Handlungen während der Kalibrierung und die Anzahl der Kalibrierschritte geprägt von der Art der Baugruppe, auf die jeweilige Art der Baugruppe optimiert und von Art zu Art unterschiedlich.

Bei den Herstellern derartiger Baugruppen entsteht für jede Baugruppenart während der Baugruppenentwicklung eine Kalibriervorschrift für die Fertigung. Diese Kalibriervorschrift beschreibt dokumentarisch die für diese Art der Baugruppe durchzuführenden Kalibrierschritte. In der Baugruppe selbst ist eine entsprechende Kalibrierlogik enthalten. Diese Kalibrierlogik wird im Verlauf einer Kalibrierung im Werk aktiviert und muss mit den in der Kalibriervorschrift beschriebenen Kommandos und Meldungen ver- und entsorgt werden.

Die Kalibrierung beim Hersteller erfolgt mit einem spezifisch auf die jeweilige Baugruppenart optimierten Kalibrierablauf, der in der Regel zeitoptimal realisiert ist. Durchzuführende einzelne Kalibrierschritte können kompliziert sein. Oft werden mehrere Kanäle gleichzeitig kalibriert. Es entstehen nur so viele Kalibrierfaktoren, wie für die Baugruppe unbedingt notwendig sind.

Die während der Kalibrierung auf der Baugruppe entstehenden Kalibrierwerte zur Offset-Kompensation und zur Anpassung der Verstärkung an den geforderten Sollverlauf werden auf der Baugruppe remanent gespeichert. Dabei entstehen abhängig von der Baugruppenart kanalspezifische Kalibrierfaktoren, welche für einen aber auch für mehrere Kanäle oder für die gesamte Baugruppe gelten können.

Regelmäßig werden die Baugruppen nur einmal im Herstellerwerk kalibriert. Dabei bleiben kunden- oder anlagenspezifische Einflüsse wie beispielsweise Leitungslängen, Temperaturbedingungen oder auch Alterung unberücksichtigt.

Um Anwendern die Möglichkeit zu bieten, Baugruppen vor Ort zu kalibrieren beziehungsweise in bestimmten Zeitintervallen nachzukalibrieren, kann den Anwendern die Kalibriervorschrift ausgehändigt werden. Dies ist problematisch, da Kalibriervorschriften in der Regel nicht anwenderfreundlich geschrieben sind, sondern sich an geschultes Personal des Herstellers wenden. Anwender sind daher häufig darauf angewiesen, die Baugruppen zur Kalibrierung an das Herstellerwerk zu senden.

Es ist Aufgabe der Erfindung, eine eingangs genannte Baugruppe beziehungsweise ein eingangs genanntes Verfahren derart auszubilden, dass die Kalibrierung von Baugruppen auf einfache Weise geschehen kann.

Die Lösung dieser Aufgabe ergibt sich aus den Merkmalen des kennzeichnenden Teils des Anspruchs 1. Vorteilhafte Weiterbildungen der Erfindung ergeben sich aus den Unteransprüchen.

Gemäß der Erfindung ist eine Baugruppe mit wenigstens einem Kanal zur Erfassung oder zur Ausgabe von Signalen, welche eine Kalibrierlogik aufweist zur Kalibrierung des Kanals gemäß einem vorgegebenen Ablauf, mittels dem Kalibrierwerte ermittelt werden, und eine Anwenderschnittstelle aufweist zur Steuerung der Kalibrierung, dadurch gekennzeichnet, dass ein Modul vorhanden ist, in welchem der vorgegebene Ablauf gespeichert ist.

Des Weiteren ist gemäß der Erfindung ein Verfahren zur Kalibrierung einer Baugruppe mit wenigstens einem Kanal zur Erfassung oder zur Ausgabe von Signalen, bei welchem die Kalibrierung gemäß einem vorgegebenen Ablauf erfolgt, dadurch gekennzeichnet, dass der vorgegebene Ablauf mittels eines Hand-Shake-Verfahrens erfolgt. In vorteilhafter Weise erfolgt die Steuerung durch die Baugruppe.

Dadurch, dass die erfindungsgemäße Baugruppe ein Modul aufweist, in welchem der zur Kalibrierung des Kanals vorgegebene Ablauf des Kalibriervorgangs gespeichert ist, besteht in vorteilhafter Weise die Möglichkeit, den vorgegebenen Ablauf mittels eines Hand-Shake-Verfahrens vorzunehmen, wie dies beim erfindungsgemäßen Verfahren vorgesehen ist. Dadurch, dass der vorgegebene Ablauf mittels eines Hand-Shake-Verfahrens erfolgen kann, welches insbesondere von der Baugruppe gesteuert wird, kann auf eine Beschreibung der Kalibrierung beziehungsweise eine Aushändigung der Kalibriervorschrift verzichtet werden. Beim Hand-Shake-Verfahren können die zur Kalibrierung erforderlichen gegebenenfalls komplizierten Schritte in einfache und leicht verständliche Schritte aufgegliedert sein. Der Anwender braucht lediglich jeweils durch das Hand-Shake-Verfahren geforderte Aktionen vorzunehmen und zu bestätigen.

Des Weiteren lässt sich die Kalibrierung beziehungsweise der Ablauf der Kalibrierung optimal an die Anforderungen eines Anwenders anpassen. So lässt sich das Hand-Shake-Verfahren so ausgestalten, dass die Kalibrierung kanalspezifisch und einfach verständlich erfolgt. Wird ein Kanal vom Anwender neu kalibriert, lässt sich durch eine entsprechende Art der Ablage beziehungsweise Verwaltung der Kalibrierwerte erreichen, dass sich dies beispielsweise nicht auf einen anderen Kanal der Baugruppe auswirkt, auch dann nicht, wenn baugruppenspezifisch eigentlich dieselben Kalibrierfaktoren für mehrere Kanäle der Baugruppe gelten. Unterstützt ein Kanal einer Baugruppe durch unterschiedliche Parametrierung mehrere Messarten, wie beispielsweise Strom oder Spannung, und mehrere Messbereiche, wie beispielsweise Null bis zwanzig Milli-Ampere oder plus minus fünfzig Milli-Volt, lässt sich erreichen, dass eine beim Anwender durchgeführte Kalibrierung eines Kanals in einer bestimmten Messart beziehungsweise in einem bestimmten Messbereich keinen Einfluss auf die Kalibrierung desselben Kanals bei einer anderen Messart beziehungsweise bei einem anderen Messbereich hat.

Bei einer besonderen Ausführungsform der Erfindung werden die Kalibrierwerte mit einem Zeitstempel versehen und dauerhaft gespeichert. Hierzu ist in vorteilhafter Weise bei einer erfindungsgemäßen Baugruppe ein entsprechender Speicher vorhanden. Hierdurch wird in vorteilhafter Weise erreicht, dass jede durchgeführte Kalibrierung wieder rückgängig gemacht werden kann. Dadurch, dass jede Kalibrierung kanal- und messartgranular durch einen eigenen Zeitstempel gekennzeichnet ist, ist sie somit auch dokumentiert.

In dem Speicher lassen sich durch den Zeitstempel die Kalibrierwerte bestimmen und zur Kalibrierung verwenden. Die aktuell wirksamen Kalibrierwerte sind messartgranular inklusive des Zeitstempels auslesbar. Selbstverständlich lassen sich auch die vom Hersteller ursprünglich ermittelten Kalibrierwerte bestimmen und verwenden, so dass hierdurch die Baugruppe auch in ihren Auslieferungszustand versetzt werden kann, d. h., jede vom Anwender durchgeführte Kalibrierung kann wieder rückgängig gemacht werden, indem die werksseitig ermittelten Kalibrierwerte wieder aktiviert werden.

Bei einer weiteren besonderen Ausführungsform der Erfindung ist vorgesehen, dass das Hand-Shake-Verfahren so ausgebildet ist, dass die Kalibrierung entsprechend einer vom Hersteller ursprünglich vorgenommenen Werkskalibrierung erfolgt. Hierdurch lässt sich erreichen, dass über eine einheitliche Anwenderschnittstelle und eine einheitliche Schnittstelle zur Kalibrierlogik der Baugruppe neben der Anwenderkalibrierung noch eine Werkskalibrierung vorgenommen werden kann. Beide Kalibriervorgänge basieren auf denselben Abläufen. Dabei liegt die Logik der bei jedem Kalibrierschritt vom Anwender durchzuführenden Handlung (Aktion) auf der Baugruppe und muss dem Anwender nicht baugruppenspezifisch offen gelegt werden, wie beispielsweise als "Wissen" in einer Applikation. Die erfindungsgemäße Kalibrierung ist allgemein gültig und für unterschiedliche Baugruppen nutzbar. Dementsprechend werden auch die Reaktionen der Baugruppe bei jedem Kalibrierschritt allgemein gültig auf der Baugruppe festgelegt.

Der durch die Erfindung definierte Mechanismus und die Logik werden in Form eines allgemein gültigen Softwaremoduls "Kalibrierung" für eine betreffende Baugruppe in Form einer Firmware festgelegt. Die Festlegung betrifft die Schnittstelle nach außen, d. h. die Anwenderschnittstelle, und die Schnittstelle nach innen, d. h. die Schnittstelle zur eigentlichen Kalibrierlogik der Baugruppe, die Mechanismen innerhalb des Softwaremoduls "Kalibrierung" und die Struktur der remanenten Ablage der Kalibrierfaktoren.

Die Anzahl der notwendigen Kalibrierschritte, die Aktionen des Anwenders und die baugruppenspezifischen Reaktionen werden während der Baugruppenentwicklung festgelegt und in fest definierter Struktur konfiguriert. Die Struktur der remanenten Ablage aller Kalibrierwerte inklusive den entsprechenden Zeitstempeln wird einheitlich festgelegt. Die Anwenderschnittstelle inklusive aller Kommandos und möglichen Rückmeldungen der Baugruppe wird einheitlich und allgemein gültig definiert. Die Schnittstelle zur Kalibrierlogik der Baugruppe wird einheitlich und allgemein gültig definiert.

Mittels der Erfindung ist es leicht möglich, Baugruppen mit der Funktionalität "Nachkalibrierung beim Anwender" zusätzlich zur Werkskalibrierung zu realisieren. Die Nachkalibrierung ist kanal- und messartgranular und damit für den Anwender komfortabel nutzbar. Die Nachkalibrierung ist optional zur Werkskalibrierung. Beide Arten der Kalibrierung sind in ihren Abläufen optimal auf die betreffenden Anforderungen abgestimmt, nutzen aber dieselben Mechanismen.

Durch die Festlegung einer einheitlichen Anwenderschnittstelle und durch die Steuerung des Kalibrierablaufs durch die jeweilige Baugruppe lässt sich leicht und ohne spezifisches Wissen ein komfortables Steuerungsprogramm erstellen, wie beispielsweise zur Visualisierung als PC-Software. Es muss ausschließlich die Anwenderschnittstelle, d. h., es müssen die Kommandos und Rückmeldekennungen im Steuerungsprogramm bekannt sein, es muss nicht die Art der Baugruppe und es müssen somit nicht die spezifischen Eigenschaften der Baugruppe bekannt sein.

Durch die Festlegung einer einheitlichen Schnittstelle zur spezifischen Kalibrierlogik der Baugruppe ergibt sich der große Vorteil, dass sich das Softwaremodul universell bei allen zu realisierenden Analogbaugruppen verwenden lässt. Die baugruppenspezifisch notwendigen Aktionen des Kalibrators (Anwender) wie auch die baugruppenseitig durchzuführenden Reaktionen der Kalibrierlogik werden für jeden Kalibrierschritt bei der Baugruppenentwicklung einmalig festgelegt und entsprechend konfiguriert.

Durch die Steuerung des Kalibrierablaufs durch die Baugruppe, d. h., alle Aktionen werden von der Baugruppe initiiert, können neue Baugruppen auch mit neuen Kalibrierabläufen entstehen, ohne dass für diese neuen Baugruppen die Steuerungssoftware geändert beziehungsweise erweitert werden muss.

Sehr vorteilhaft bei der vorliegenden Erfindung ist es, dass alle Kalibrierwerte messbetriebsartgranular für jeden Kanal verwaltet werden können. Über konfigurierte mögliche Messbereiche eines Kanals erfolgt die Ablage und Zuordnung der Kalibrierwerte wie auch die Führung des Anwenders im Ablauf einer Anwenderkalibrierung. D. h., der Anwender wird im Ablauf einer Anwenderkalibrierung über die Antworten der Baugruppe geführt. Dies erfolgt entsprechend dem jeweils betreffenden Kanal und der jeweils eingestellten Messbetriebsart. Der Anwender benötigt keinerlei spezifisches Baugruppenwissen.

Weitere Einzelheiten, Merkmale und Vorteile der vorliegenden Erfindung ergeben sich aus der nachfolgenden Beschreibung eines besonderen Ausführungsbeispiels unter Bezugnahme auf die Zeichnung.

Es zeigen:
- Fig. 1: ein Blockschaltbild einer erfindungsgemäßen Baugruppe in schematischer Darstellung,
- Fig. 2: ein Funktionsdiagramm des erfindungsgemäßen Verfahrens in schematischer Darstellung,
- Fig. 3: eine schematische Darstellung einer Festlegung von Feldern für einen in einem Modul hinterlegten Ablauf der Aktionen eines Anwenders und der baugruppenspezifischen Reaktionen und
- Fig. 4: eine schematische Darstellung eines im Hand-Shake-Verfahren erfolgten Ablaufs einer Kalibrierung.

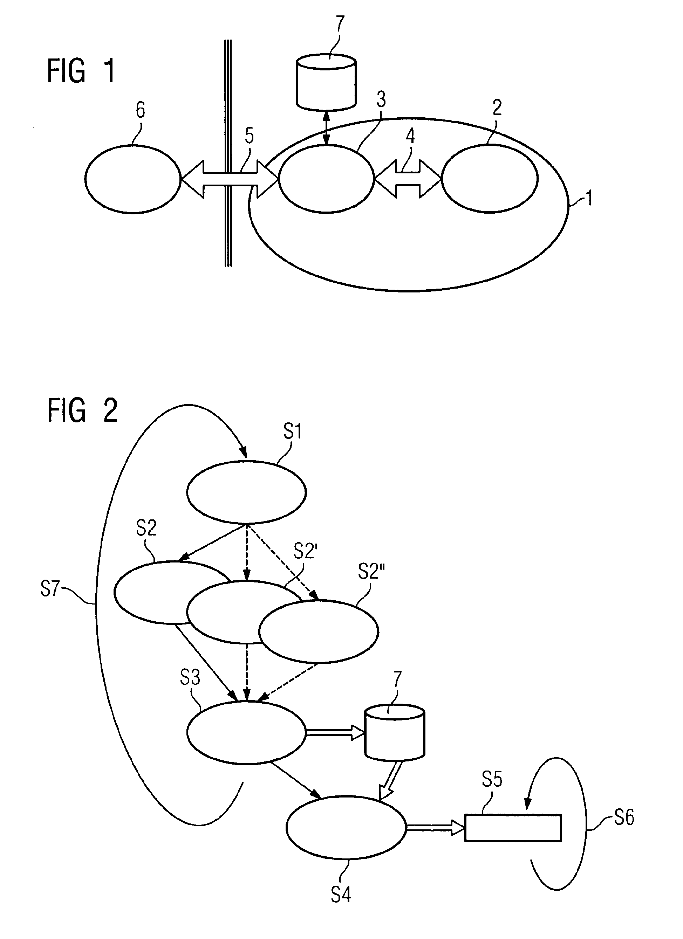

Wie Fig. 1 entnommen werden kann, ist in die Software 1 einer Baugruppe eine Kalibrierlogik 2 eingebettet. Die Kalibrierlogik 2 ist während der Entwicklung der Baugruppe erstellt worden und entspricht im Wesentlichen einer herkömmlichen Kalibrierlogik. Die Kalibrierlogik 2 muss zur Kalibrierung mit den in einer für die Baugruppe ebenfalls bei der Entwicklung erstellten Kalibriervorschrift beschriebenen Kommandos und Meldungen ver- und entsorgt werden.

Des Weiteren ist in die Software 1 der Baugruppe ein Kalibriermodul 3 eingebettet, welches eine Schnittstelle 4 zur Kalibrierlogik 2 und eine Schnittstelle 5 zu einem Anwender 6 hat. Das Kalibriermodul 3 versorgt einerseits den Anwender 6 mit Informationen beziehungsweise Anforderungen und andererseits die Kalibrierlogik 2 mit Kommandos. Hierzu ist im Kalibriermodul 3 eine Konfiguration von Aktionen und Reaktionen hinterlegt. Die Konfiguration ist messart-, kanal- und kalibrierschrittgranular.

Durch die Konfiguration kann mit dem Anwender 6 über die Schnittstelle 5 mittels eines Hand-Shake-Verfahrens in Verbindung getreten werden und dem Anwender 6 dadurch die von ihm zur Kalibrierung benötigten Informationen zur Verfügung gestellt werden. Aufgrund der vom Anwender 6 erfolgten Aktionen versorgt das Kalibriermodul 3 die Kalibrierlogik 2 über die Schnittstelle 4 mit den entsprechenden Kommandos beziehungsweise Meldungen.

Das Kalibriermodul 3 ist des Weiteren mit einem remanenten Speicher 7 verbunden. In den Speicher 7 werden die während einer Kalibrierung ermittelten Kalibrierwerte mit einem Zeitstempel versehen gespeichert. Auch werden im Rahmen einer Werkskalibrierung in den Speicher 7 die bei der Werkskalibrierung ermittelten Kalibrierwerte gespeichert. Bei der Inbetriebnahme der Baugruppe werden die zur Kalibrierung benötigten Kalibrierwerte aus dem Speicher 7 ausgelesen und in dafür vorgesehenen Speicherorten der Baugruppe gespeichert. Die Verwaltung der im Speicher 7 gespeicherten Kalibrierwerte erfolgt durch das Kalibriermodul 3. Durch die Zeitstempel ist das Kalibriermodul 3 in der Lage, auf bestimmte Kalibrierwerte zuzugreifen, so dass der Anwender 6 entscheiden kann, welche Kalibrierwerte in die betreffenden Speicherorte der Baugruppe geladen werden sollen. In vorteilhafter Weise gelten grundsätzlich die Kalibrierwerte der zuletzt vom Anwender korrekt durchgeführten Kalibrierung.

Die Funktionsweise der in Fig. 1 dargestellten Anordnung wird nun unter Zuhilfenahme von Fig. 2 beschrieben. Bei einer Kalibrierung wird zunächst im Kalibriermodul 3 ein vom Anwender 6 über die Anwenderschnittstelle 5 eingegebenes Kalibrierkommando wie beispielsweise "Anwenderkalibrierung", "Reset" oder "Werkskalibrierung wiederherstellen" interpretiert und geprüft (S1). Danach wird die entsprechende Kalibrieraktion wie beispielsweise "Offset-Kalibrierung", "Full-Scale-Kalibrierung" angestoßen beziehungsweise durchgeführt (S2, S2', S2") und die dadurch entstehenden Kalibrierwerte verwaltet (S3). Die aktuell gültigen Kalibrierwerte werden der Kalibrierlogik 2 über die Schnittstelle 4 vom Kalibriermodul 3 mitgeteilt.

Die einzelnen Kalibrierkommandos sind mehrschrittig, d. h., im Kalibriermodul 3 wird kommandospezifisch und basierend auf der im Kalibriermodul 3 enthaltenen Konfiguration der Kalibrierschritte eine Antwort auf das Kalibrierkommando gebildet. Entsprechend der Antwort muss dann gegebenenfalls eine weitere Aktion des Anwenders 6 über die Anwenderschnittstelle 5 erfolgen. Dies wiederholt sich so lange (S7), wie dies durch die Konfiguration der Kalibrierschritte vorgegeben ist und vom Anwender 6 eine jeweils entsprechende Aktion erfolgt.

Im Ablauf eines Kalibrierkommandos werden die einzelnen Kalibrieraktionen wie beispielsweise "Offset-Kalibrierung", "Full-Scale-Kalibrierung" durchgeführt und die entstehenden Kalibrierwerte verwaltet. Der Anwender 6 bestimmt, welche Kalibrierwerte verwendet werden sollen. Diese Kalibrierwerte werden dann in die betreffenden Speicherorte der Baugruppe geladen (S4). In vorteilhafter Weise können Kalibrierwerte der zuletzt vom Anwender 6 korrekt durchgeführten Kalibrierung genommen werden, ohne dass dies vom Anwender 6 explizit angegeben werden muss.

Die Zuordnung der Kalibrierwerte (Werks- oder Anwenderkalibrierwerte) kann über die Kanalnummer und Messbetriebsart erfolgen. Die relevanten Kalibrierwerte (Werks- oder Anwenderkalibrierwerte) werden dem Messzyklus (S6) der Baugruppe zur eigentlichen Analogwertverarbeitung zur Verfügung gestellt (S5) .

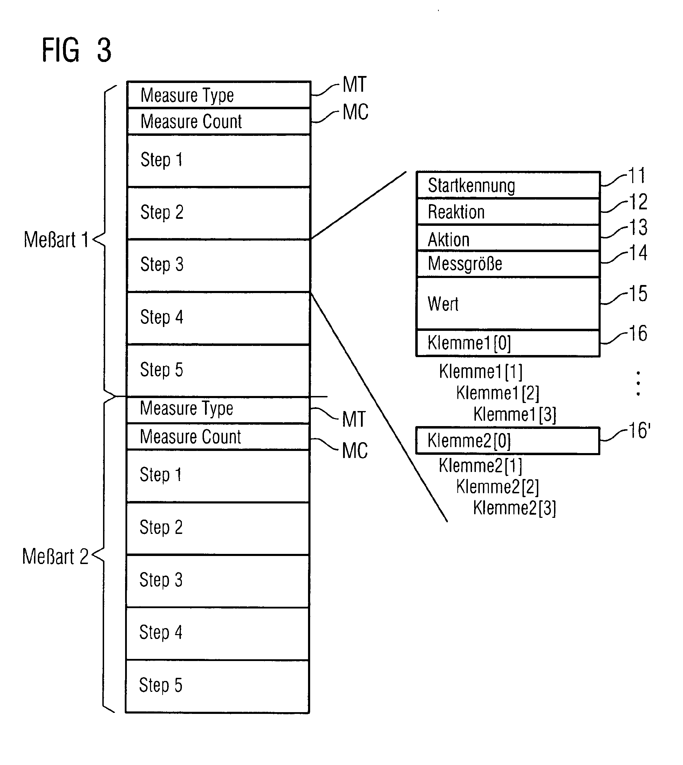

Wie Fig. 3 entnommen werden kann, sind die Abläufe für jede Messart, von denen in Fig. 3 zwei dargestellt sind, durch einen Messartentyp MT gekennzeichnet. Des Weiteren ist in einem Feld MC für jede Messart angegeben, wie viel Kalibrierschritte (Step) für die betreffende Kalibrierung erforderlich sind. Bei den in Fig. 3 dargestellten Messarten sind maximal fünf Schritte erforderlich. Die tatsächliche Anzahl der Kalibrierschritte wird jedoch im Feld MC angegeben.

Die Festlegung der Kalibrierschritte wird beispielhaft für einen Kalibrierschritt (Step 3) vorgenommen.

Wie in Fig. 3 dargestellt ist, weist jeder Kalibrierschritt (Step 1 bis Step 5) eine Startkennung 11 auf, durch welche die Ausführungen des betreffenden Kalibrierschritts eingeleitet werden. Das zweite Feld 12 ist vorgesehen für die Reaktion der Kalibrierlogik im aktuellen Schritt, beispielsweise "Offset-Kalibrierung durchführen". Im nächsten Feld 13 ist die Aktion des Anwenders angegeben, die erforderlich ist, um den nächsten Schritt zu erreichen, beispielsweise "Messen". Im nächsten Feld 14 ist die Messgröße eingetragen, beispielsweise "Milli-Volt". Im darauf folgenden Feld 15 ist der Wert der Messgröße eingetragen, beispielsweise "11". Im nächsten Feld 16, 16' sind die Klemmen nach Kanälen unterschieden angegeben. Im vorliegenden Fall sind zwei Klemmen pro Kanal und vier Kanäle vorhanden.

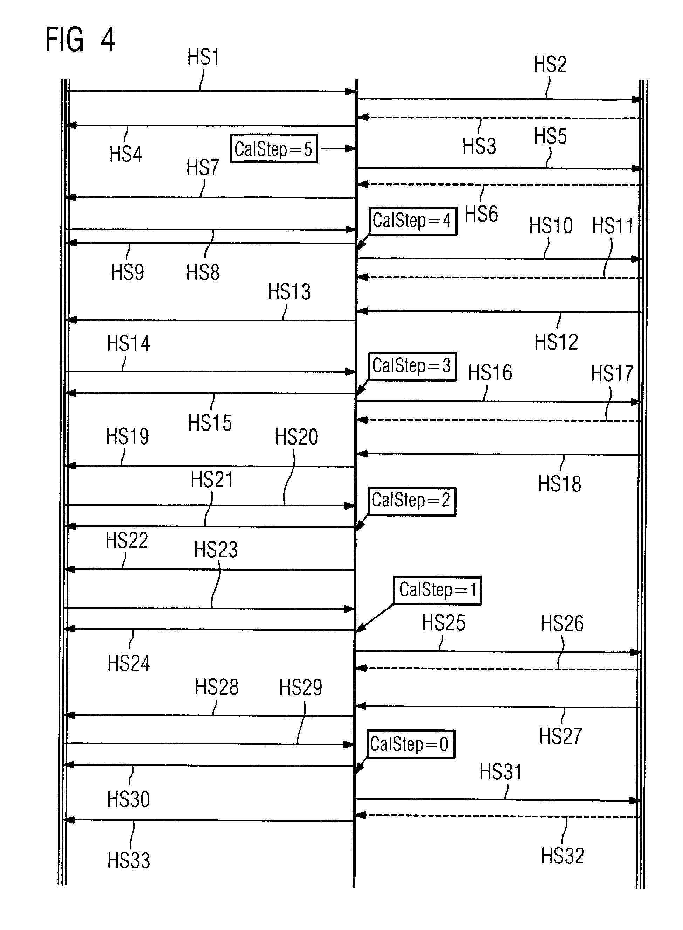

Das vom Kalibriermodul 3 gesteuerte Hand-Shake-Verfahren wird nun anhand Fig. 4 unter Einbeziehung der in Fig. 3 dargestellten Festlegung erläutert.

Wie Fig. 4 entnommen werden kann, wird vom Anwender 6 zunächst ein Erstanstoß (HS1) zur Einleitung einer Anwender-Kalibrierung vorgenommen. Hierbei wird dem Kalibriermodul 3 über die Anwenderschnittstelle 5 zunächst die Kanalnummer mitgeteilt und dass es sich um eine Anwender-Kalibrierung handelt.

Das Kalibriermodul 3 fordert daraufhin von der Kalibrierlogik 2 die Angabe der aktuell eingestellten Messbetriebsart an (HS2). Auf die Anforderung (HS2) hin teilt die Kalibrierlogik 2 dem Kalibriermodul 3 die Messbetriebsart mit (HS3).

Daraufhin teilt das Kalibriermodul 3 dem Anwender 6 mit, dass es den Befehl vom Anwender 6 erhalten hat und die Angelegenheit bearbeitet (HS4). Des Weiteren teilt das Kalibriermodul 3 der Kalibrierlogik 2 mit, dass es in die Kalibrierung eintreten soll (HS5). Die Kalibrierlogik 2 bestätigt dies mit einer entsprechenden Meldung (HS6).

Daraufhin teilt das Kalibriermodul 3 dem Anwender 6 mit, dass die Kalibrierung eingeleitet wurde sowie welche Aktion der Anwender 6 vornehmen muss (HS7). Beispielsweise soll der Anwender 6 die im entsprechenden Feld des betreffenden Kalibrierschritts hinterlegten Klemmen kurzschließen.

Nachdem der Anwender 6 die betreffenden Klemmen kurzgeschlossen hat, bestätigt er dies dem Kalibriermodul 3 (HS8). Das Kalibriermodul 3 quittiert dem Anwender 6 die Bestätigung (HS9). Des Weiteren übermittelt das Kalibriermodul 3 der Kalibrierlogik 2 einen Befehl (HS10) zur Durchführung der Kalibrierung, beispielsweise "Offset-Kalibrierung durchführen". Die Kalibrierlogik 2 quittiert dem Kalibriermodul 3 den Empfang des Befehls (HS11). Nachdem die Kalibrierlogik 2 den Befehl abgearbeitet hat, bestätigt es dem Kalibriermodul 3 die Erledigung des Befehls (HS12). Das Kalibriermodul 3 teilt daraufhin dem Anwender 6 mit, dass er an die in dem betreffenden Kalibrierschritt genannten Klemmen eine Spannung anlegen soll (HS13); beispielsweise 11250 Milli-Volt anlegen.

Nachdem der Anwender 6 die geforderte Spannung angelegt hat, bestätigt er dies dem Kalibriermodul 3 (HS14). Das Kalibriermodul 3 quittiert dem Anwender 6 die Bestätigung (HS15). Des Weiteren übermittelt das Kalibriermodul 3 der Kalibrierlogik 2 einen Befehl (HS16) zur Durchführung des nächsten Kalibrierschritts, beispielsweise "Offset-Kalibrierung durchführen". Die Kalibrierlogik 2 quittiert dem Kalibriermodul 3 den Empfang des Befehls (HS17). Nachdem die Kalibrierlogik 2 den Befehl abgearbeitet hat, bestätigt sie dem Kalibriermodul 3 die Erledigung des Befehls (HS18). Das Kalibriermodul 3 teilt daraufhin dem Anwender 6 die nächste Aktion mit (HS19), die der Anwender 6 vornehmen soll, beispielsweise Anschlüsse entfernen.

Nachdem der Anwender 6 die Anschlüsse entfernt hat, bestätigt er dies dem Kalibriermodul 3 (HS20). Das Kalibriermodul 3 quittiert dem Anwender 6 die Bestätigung (HS21). Des Weiteren übermittelt das Kalibriermodul 3 dem Anwender 6 für den nächsten Kalibrierschritt eine weitere Aktion, die der Anwender 6 vornehmen soll, beispielsweise Messen eines Stroms (HS22). Nachdem der Anwender 6 den Strom gemessen hat, teilt er dem Kalibriermodul 3 den Messwert mit (HS23). Das Kalibriermodul 3 quittiert dem Anwender 6 den Empfang der Messdaten (HS24). Des Weiteren übermittelt das Kalibriermodul 3 der Kalibrierlogik 2 einen weiteren Befehl (HS25) und übergibt den vom Anwender gemessenen Stromwert zur Kalibrierung der Kalibrierlogik 2. Die Kalibrierlogik 2 quittiert dem Kalibriermodul 3 den Empfang des Befehls (HS26). Nachdem die Kalibrierlogik 2 den Befehl abgearbeitet hat, bestätigt sie dem Kalibriermodul 3 die Erledigung des Befehles (HS27). Das Kalibriermodul 3 teilt daraufhin dem Anwender 6 mit, dass keine weitere Aktion zu erfolgen hat (HS28).

Der Anwender sendet daraufhin an das Kalibriermodul 3 einen Zeitstempel (HS29). Das Kalibriermodul 3 quittiert dem Anwender 6 den Empfang des Zeitstempels (HS30). Das Kalibriermodul 3 speichert die im Verlauf der aktuellen Kalibrierung ermittelten Kalibrierwerte in Verbindung mit dem Zeitstempel entsprechend der Verwaltung remanent im Speicher 7. Des Weiteren teilt das Kalibriermodul 3 der Kalibrierlogik 2 mit, dass es die Kalibrierung wieder verlassen soll (HS31). Die Kalibrierlogik 2 bestätigt dies dem Kalibriermodul 3 (HS32). Daraufhin sendet das Kalibriermodul 3 an den Anwender 6 die Meldung, dass der gesamte Kalibriervorgang beendet ist (HS33).

## Patentansprüche

1. Baugruppe mit wenigstens einem Kanal zur Erfassung oder zur Ausgabe von Signalen, welche eine Kalibrierlogik aufweist zur Kalibrierung des Kanals gemäß einem vorgegebenen Ablauf, mittels dem Kalibrierwerte ermittelt werden, und eine Anwenderschnittstelle aufweist zur Steuerung der Kalibrierung, **dadurch gekennzeichnet, dass** ein Modul vorhanden ist, in welchem der vorgegebene Ablauf gespeichert ist.

2. Baugruppe nach Anspruch 1, **dadurch gekennzeichnet, dass** die Kalibrierwerte mit einem Zeitstempel versehen sind und ein Speicher vorhanden ist, in welchem die mit dem Zeitstempel versehenen Kalibrierwerte dauerhaft gespeichert sind.

3. Baugruppe nach Anspruch 1 oder 2, **dadurch gekennzeichnet, dass** der vorgegebene Ablauf über die Anwenderschnittstelle mittels eines Hand-Shake-Verfahrens steuerbar ist.

4. Verfahren zur Kalibrierung einer Baugruppe mit wenigstens einem Kanal zur Erfassung oder zur Ausgabe von Signalen, bei welchem die Kalibrierung gemäß einem vorgegebenen Ablauf erfolgt, **dadurch gekennzeichnet, dass** der vorgegebene Ablauf mittels eines Hand-Shake-Verfahrens erfolgt.

5. Verfahren nach Anspruch 4, **dadurch gekennzeichnet, dass** bei mehreren Kanälen jeder Kanal separat kalibrierbar ist.

6. Verfahren nach Anspruch 4 oder 5, **dadurch gekennzeichnet, dass** bei mehreren Messarten jede Messart separat kalibrierbar ist.

7. Verfahren nach einem der Ansprüche 4 bis 6, **dadurch gekennzeichnet, dass** die Kalibrierwerte mit einem Zeitstempel versehen und dauerhaft gespeichert werden.

8. Verfahren nach Anspruch 7, **dadurch gekennzeichnet, dass** zur Kalibrierung auf beliebige gespeicherte Kalibrierwerte zurückgegriffen werden kann.

9. Verfahren nach einem der Ansprüche 4 bis 8, **dadurch gekennzeichnet, dass** das Hand-Shake-Verfahren so ausgebildet ist, dass die Kalibrierung entsprechend einer vom Hersteller ursprünglich vorgenommenen Werkskalibrierung erfolgt.

## Geänderte Patentansprüche

### Geänderte Patentansprüche gemäss Regel 137(2) EPÜ.

**1.** Kalibrierlogik zur Kalibrierung einer Baugruppe mit wenigstens einem Kanal zur Erfassung oder zur Ausgabe von Signalen, mittels welcher die Kalibrierung des Kanals gemäß einem vorgegebenen Ablauf erfolgt, mittels dem die Kalibrierwerte ermittelt werden, welche ein Modul aufweist, in welchem der vorgegebene Ablauf gespeichert ist, **dadurch gekennzeichnet, dass** die Kalibrierlogik eine Anwenderschnittstelle aufweist, zur Steuerung der Kalibrierung mittels eines Hand-Shake-Verfahrens.

**2.** Kalibrierlogik nach Anspruch 1, **dadurch gekennzeichnet, dass** die Kalibrierwerte mit einem Zeitstempel versehen sind und ein Speicher vorhanden ist, in welchem die mit dem Zeitstempel versehenen Kalibrierwerte dauerhaft gespeichert sind.

**3.** Baugruppe mit wenigstens einem Kanal zur Erfassung oder zur Ausgabe von Signalen, **dadurch gekennzeichnet, dass** sie eine Kalibrierlogik nach einem der Ansprüche 1 bis 2 aufweist.
